(19) Europäisches Patentamt
European Patent Office
Office européen des brevets

(11) **EP 2 741 212 A1**

(12) **EUROPEAN PATENT APPLICATION**

(43) Date of publication:
**11.06.2014 Bulletin 2014/24**

(51) Int Cl.:
***G06F 11/34*** *(2006.01)*

(21) Application number: **13189828.0**

(22) Date of filing: **23.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.12.2012 JP 2012266837**

(71) Applicant: **Hitachi Ltd.**
**Tokyo 100-8280 (JP)**

(72) Inventors:
 • **Kato, Hideyuki**
  **Tokyo, 100-8280, (JP)**
 • **Sumii, Kenji**
  **Tokyo, 100-8280, (JP)**

 • **Wakamatsu, Shingo**
  **Tokyo, 100-8280, (JP)**
 • **Tateishi, Yuki**
  **Tokyo, 100-8280, (JP)**
 • **Yoshikawa, Kohei**
  **Tokyo, 100-8280, (JP)**
 • **Harada, Akinao**
  **Tokyo, 100-8280, (JP)**
 • **Watanabe, Kazuhiko**
  **Tokyo, 100-8280, (JP)**
 • **Yamatani, Kengo**
  **Tokyo, 141-8672, (JP)**

(74) Representative: **Moore, Graeme Patrick et al**
**Mewburn Ellis LLP**
**33 Gutter Lane**
**London**
**EC2V 8AS (GB)**

(54) **System resource management method for virtual system**

(57) Specifically, a service menu is set for each user ID to determine an information distribution range/distribution amount according to the service menu. Finally, "vendor lock-in" of an infrastructure (hardware, software) is a typical alternative to be adopted to provide high-quality service at low cost. Pieces of information obtained for each product are temporarily collected, are categorized at the same level into pieces of information for respective purposes (screens), and then are provided for users. This achieves proper capacity planning.

FIG. 17

**(Cont. next page)**

# FIG. 18(1)

```
( START )
```

·CAUSE SYSTEM USER TO ACQUIRE VIRTUAL NODE ID <1403> ASSOCIATED WITH USER CODE
  <1402> FROM SYSTEM MANAGEMENT TABLE <FIG. 14> OF USER MANAGEMENT NODE
  AND ISSUE OPERATION STATUS ACQUISITION COMMAND FOR CORRESPONDING NODE — 1801

WHICH CONFIRMATION UNIT SPECIFIED
BY USER MANAGEMENT NODE? — 1802

| PROCESSING (JOB) UNIT | WORK (JOB GROUP) UNIT | PRODUCT (SYSTEM) UNIT | VIRTUAL OS UNIT | PHYSICAL SERVER UNIT |
|---|---|---|---|---|
| STEP 1803 | STEP 1804 | STEP 1805 | STEP 1806 | STEP 1807 |

·DISPLAY OPERATION STATUS CALCULATED IN PRECEDING STEP ON USER MANAGEMENT NODE
  ACCORDING TO CONFIRMATION UNIT SPECIFIED BY USER MANAGEMENT NODE
·UNDER INSTRUCTION FOR ACQUISITION OF PAST OPERATION INFORMATION WITH IDENTICAL
  confirmation UNIT, EDIT INFORMATION OF SPECIFIED PERIOD AND DISPLAY INFORMATION
  ON USER MANAGEMENT NODE — 1808

```
( END )
```

# FIG. 18(2)

<IF CONFIRMATION UNIT IS PROCESSING (JOB)>
·CAUSE CENTER MANAGEMENT NODE TO ACQUIRE CPU USAGE RATIO <1310> AND MEMORY USAGE
 RATIO <1312> FOR TARGET JOB ID <1307> FROM OPERATION STATISTIC TABLE <FIG. 3> — 1803

<IF CONFIRMATION UNIT IS WORK (JOB GROUP) UNIT>
·CAUSE CENTER MANAGEMENT NODE TO EXTRACT JOB ID <1307> CORRESPONDING TO TARGET
 JOB GROUP ID <1306> FROM OPERATION STATISTIC TABLE <FIG. 3>
·ACQUIRE CPU USAGE RATIO <1310> AND MEMORY USAGE RATIO <1312> FROM OPERATION
 STATISTIC TABLE <FIG. 3> FOR EACH OF EXTRACTED JOB IDS <1307>
 AND CALCULATE SUM OF USAGE RATIOS — 1804

<IF CONFIRMATION UNIT IS PRODUCT (SYSTEM) UNIT>
·CAUSE CENTER MANAGEMENT NODE TO ACQUIRE CPU USAGE RATIO <1310> AND MEMORY USAGE
 RATIO <1312>FOR TARGET SYSTEM ID <1305> FROM OPERATION STATISTIC TABLE <FIG. 3> — 1805

<IF CONFIRMATION UNIT IS VIRTUAL OS UNIT>
·CAUSE CENTER MANAGEMENT NODE TO ACQUIRE CPU USAGE RATIO <1310> AND MEMORY USAGE
 RATIO <1312> FOR TARGET VIRTUAL NODE D <1304> FROM OPERATION STATISTIC TABLE
 <FIG. 3> — 1806

<IF CONFIRMATION UNIT IS PHYSICAL SERVER UNIT>
·CAUSE CENTER MANAGEMENT NODE TO EXTRACT VIRTUAL NODES ID <902> INCLUDING
 CORRESPONDING PHYSICAL NODE ID <904> FROM VIRTUAL NODE MANAGEMENT TABLE 1
 <FIG. 9>
·ACQUIRE CPU USAGE RATIO <1310> AND MEMORY USAGE RATIO <1312> FOR VIRTUAL NODE
 ID <1304> FROM OPERATION STATISTIC TABLE <FIG. 3>

IN PRESENCE OF MULTIPLE VIRTUAL NODES ON PHYSICAL NODE,
PRECEDING PROCESSING IS PERFORMED ON EACH VIRTUAL NODE
 AND SUM CPU USAGE RATIO <1310> AND MEMORY USAGE RATIO <1312> — 1807

**Description**

The present invention relates to system management for a virtual environment and particularly relates to a technique of managing the allocation of resources.

A virtual technique enables abstraction of physical resources (including a server, a storage, a CPU, and a memory) constituting a computer system, achieving a virtual system flexibly configured for each logical resource. Based on this technique, service for usage-based billing can be provided according to a resource usage rate.

In this case, virtual system management requires access authority or specified administrative authority. Regarding the administrative authority, Japanese Patent Laid-Open No. 2005-208999 discloses administrative authority set for the resource of a virtual machine by determining information on the presence or absence of administrative authority for each virtual resource ID. This allows a user to manage the resource of the virtual machine.

A virtual system is composed of various products. The level (range or depth) of obtained operation information varies among the products. Thus, a user and a system administrator of the virtual system have to process the operation information, assuming that future system users will be unable to process system configurations that are expected to become more complicated or physical resources and logical resources that are expected to increase in a virtual environment.

Operation management software and individual products (hardware, OS, database, etc.) are linked with each other to provide the functions of transversely and efficiently managing resources for virtual system users. Specifically, a service menu is set for each user ID to determine an information distribution range/distribution amount according to the service menu. Finally, "vendor lock-in" of an infrastructure (hardware, software) is a typical alternative to be adopted to provide high-quality service at low cost. Pieces of information obtained for each product are temporarily collected, are categorized at the same level into pieces of information for respective purposes (screens), and then are provided for users. This achieves proper capacity planning that suppresses system investment more than in other companies, leading to reliability that will increase orders in the future.

Precise system monitoring for a request and a flexible resource management function allow a user to prevent a mechanical loss caused by a resource shortage and further optimize system usage cost. Moreover, system administrators and operators can reduce running cost.

In the drawings:

FIG. 1 shows an example of devices/functions according to an embodiment of the present invention.
FIG. 2 shows an example of a management target according to the embodiment of the present invention.
FIG. 3 shows a company management table used in the embodiment of the present invention.
FIG. 4 shows a user management table used in the embodiment of the present invention.
FIG. 5 shows a center management table used in the embodiment of the present invention.
FIG. 6 shows a physical node management table used in the embodiment of the present invention.
FIG. 7 shows a machine specification management table used in the embodiment of the present invention.
FIG. 8 shows a job management table used in the embodiment of the present invention.
FIG. 9 shows a virtual node management table 1 used in the embodiment of the present invention.
FIG. 10 shows a virtual node management table 2.
FIG. 11 shows a virtual node management table 3 used in the embodiment of the present invention.
FIG. 12 shows a service management table used in the embodiment of the present invention.
FIG. 13 shows an operation statistic management table used in the embodiment of the present invention.
FIG. 14 shows a system management table used in the embodiment of the present invention.
FIG. 15 shows a system change/management table used in the embodiment of the present invention.
FIG. 16 shows an operation history management table used in the embodiment of the present invention.
FIG. 17 shows an operation status acquisition flow according to the embodiment of the present invention.
FIG. 18(1) shows an operation status confirmation (edit) flow (1) according to the embodiment of the present invention.
FIG. 18(2) shows an operation status confirmation (edit) flow (2) according to the embodiment of the present invention.
FIG. 19 shows a simulation (resource addition) flow according to the embodiment of the present invention.
FIG. 20 shows a simulation (job addition) flow according to the embodiment of the present invention.
FIG. 21 shows a dynamic monitoring (response) flow according to the embodiment of the present invention.
FIG. 22 shows a dynamic monitoring (resource) flow according to the embodiment of the present invention.
FIG. 23 shows a dynamic monitoring (operation conditions) flow according to the embodiment of the present invention.
FIG. 24 shows a static monitoring flow according to the embodiment of the present invention.

An embodiment of the present invention will be specifically described below with reference to the accompanying drawings. The embodiment is merely exemplary and thus the present invention is not limited to the following contents.

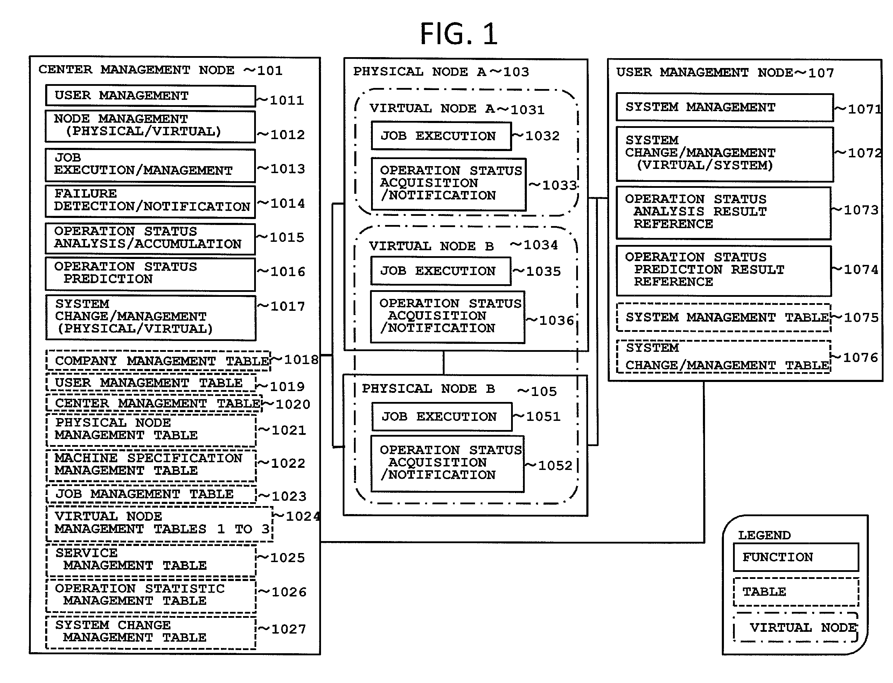

· Device/function configuration <FIG. 1>:

FIG. 1 shows devices and functions according to the embodiment of the present invention. A center management node <101> is a node used by an administrator of an overall virtual system. The center management node <101> has the functions of user management <1011>, node management (physical/virtual) <1012>, job execution/management <1013>, failure detection/notification <1014>, operation status analysis/accumulation <1015>, operation status prediction <1016>, and system change/management (physical/virtual) <1017>. Furthermore, provided management tables include a company management table <1018>, a user management table <1019>, a center management table <1020>, a physical node management table <1021>, a machine specification management table <1022>, a job management table <1023>, virtual node management tables 1 to 3 <1024>, a service management table <1025>, an operation statistic management table <1026>, and a system change management table <1027>.

A virtual node <1031> is a system unit that is created based on a virtual resource and has the functions of job execution <1032> and operation status acquisition/notification <1033>. A virtual node <1034> is created across a physical node <103> and a physical node <105>.

For a virtual system user, a user management node <107> has the functions of system management <1071>, system change/management (virtual/system) <1072>, operation status analysis result reference <1073>, and operation status prediction result reference <1074>, a system management table <1075>, and a system change/management table <1076>.

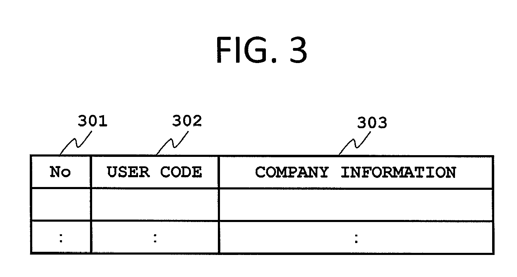

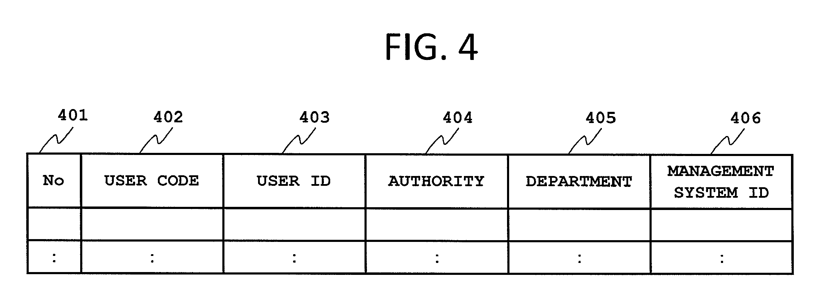

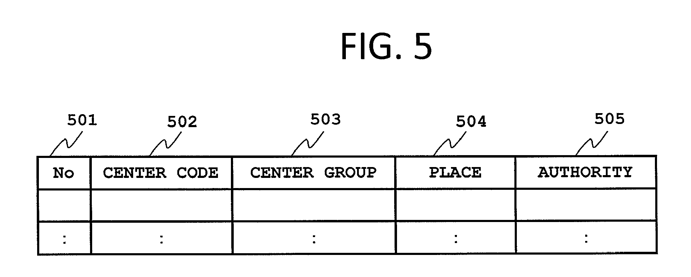

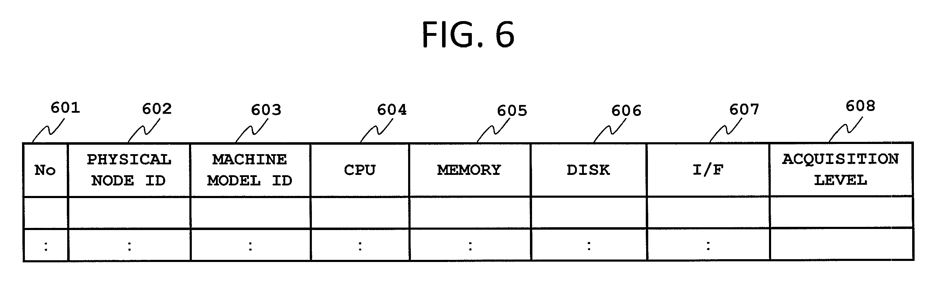

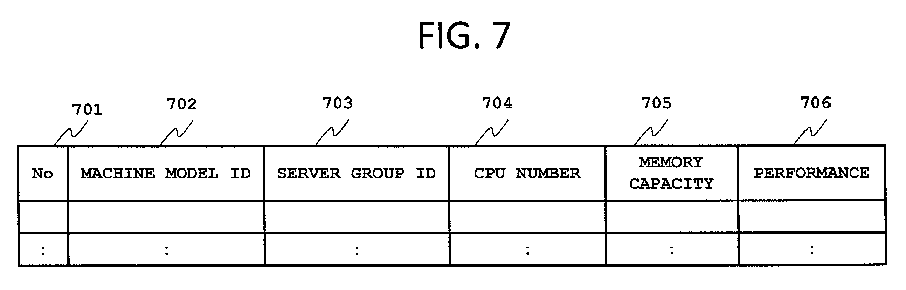

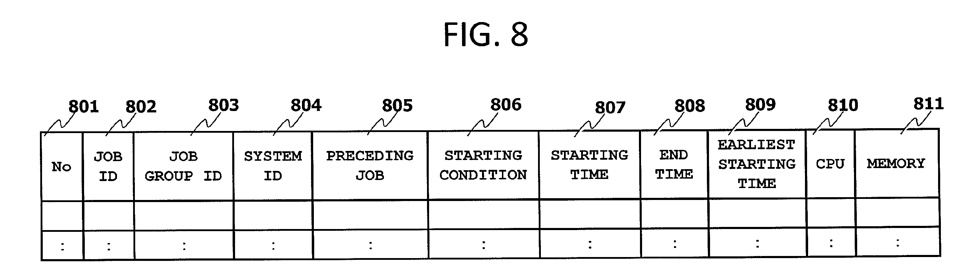

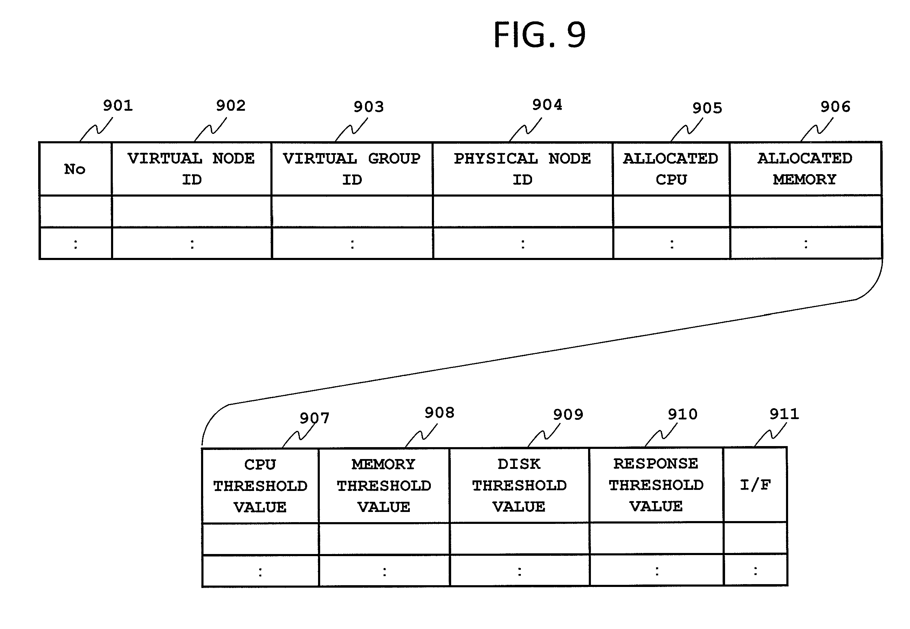

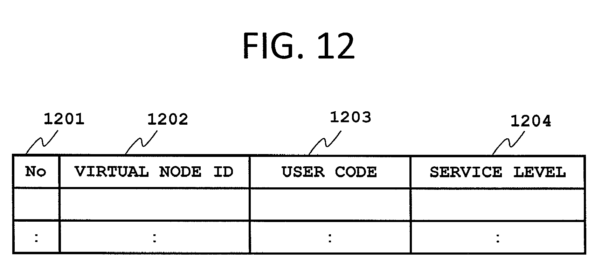

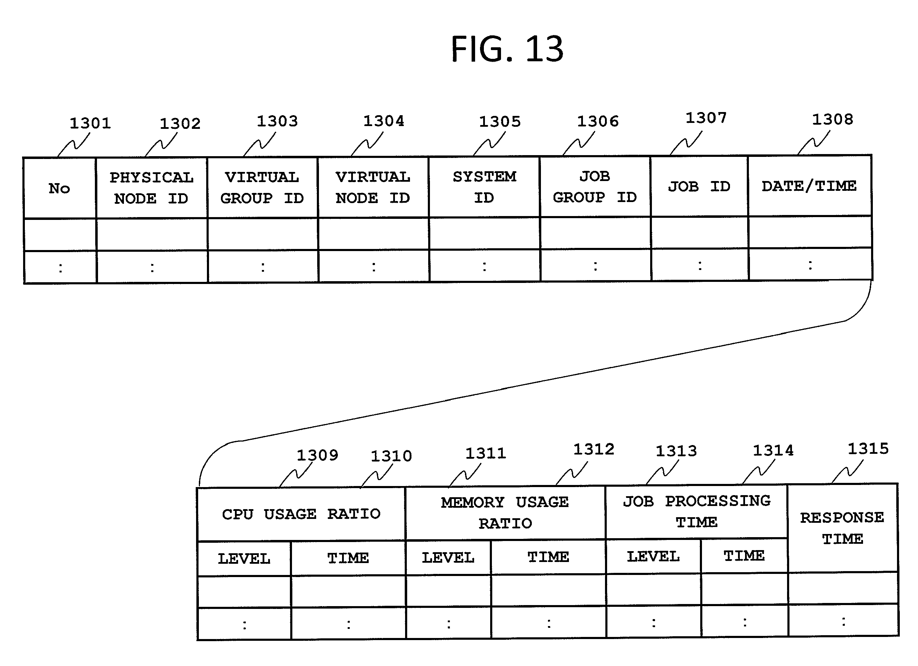

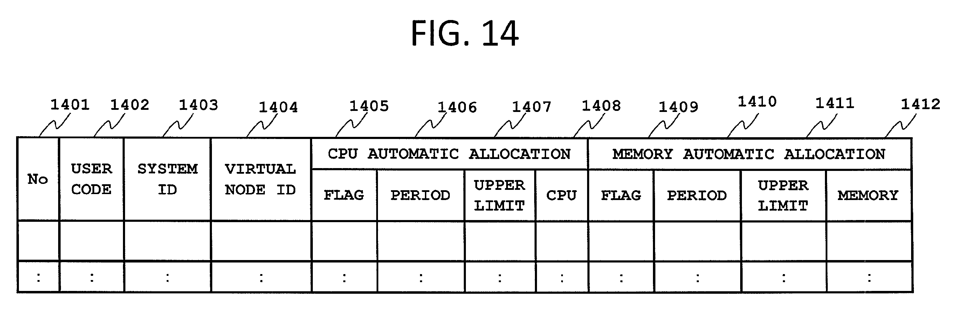

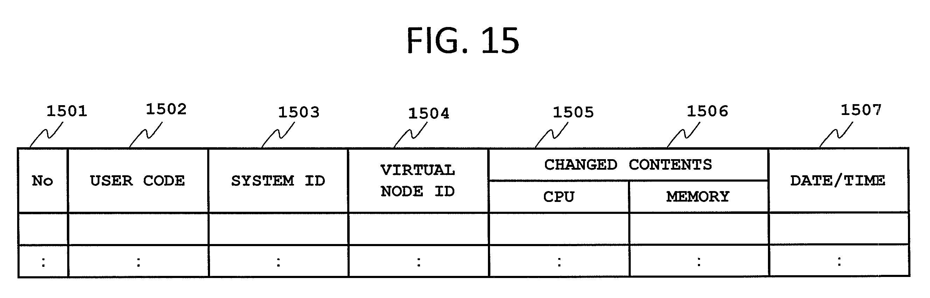

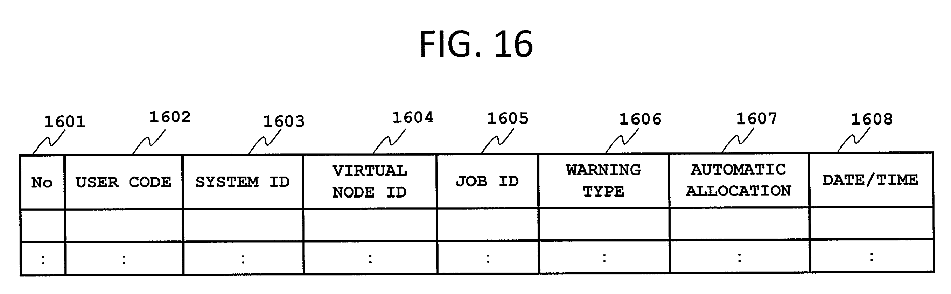

Main processing in the present invention will be described below. Before the processing is started, values are set for the parameters of the company management table <FIG. 3>, the user management table <FIG. 4>, the center management table <FIG. 5>, the physical node management table <FIG. 6>, the machine specification management table <FIG. 7>, the job management table <FIG. 8>, the virtual node management tables 1 to 3 <FIGS. 9, 10, 11>, the service management table <FIG. 12>, the operation statistic management table <FIG. 13>, the system management table <FIG. 14>, the system change/management table <FIG. 15>, and an operation history management table <FIG. 16>.

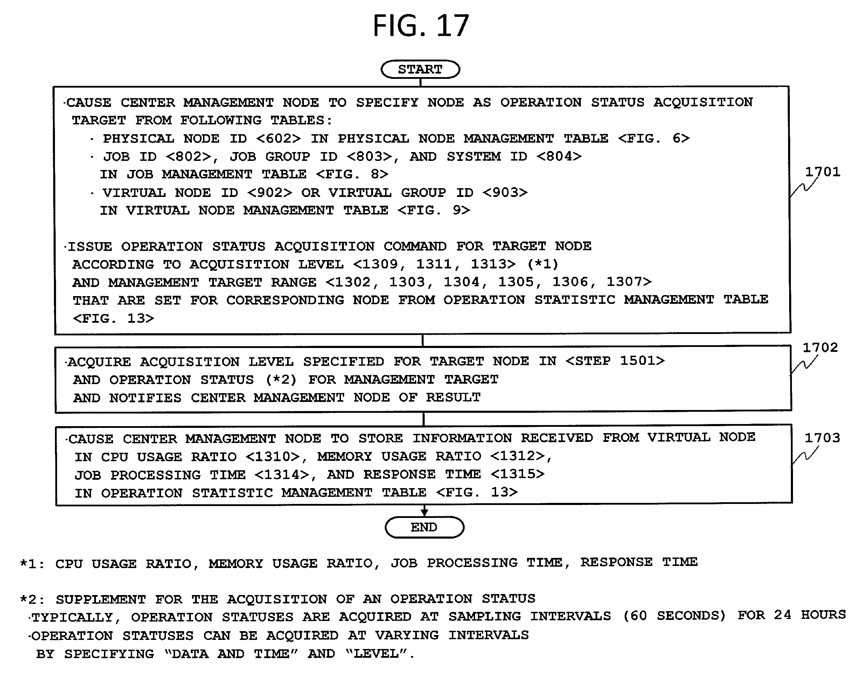

· Operation status acquisition <FIG. 17>:

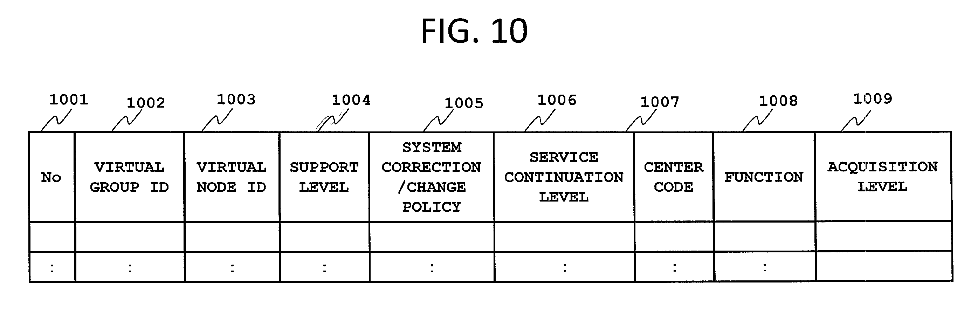

An operation status is typically acquired at intervals of 60 seconds for 24 hours. The intervals can be changed by setting a data and time or an interval in an acquisition level <608> in the physical node management table <FIG. 6> and an acquisition level <1009> in the virtual node management table 2 <FIG. 10>.

At this point, the center management node specifies a target physical node ID <904> as an information acquisition target from the virtual node management table 1 based on a physical node ID <602> of <FIG. 6> or a virtual node ID <1003> of the virtual node management table 2.

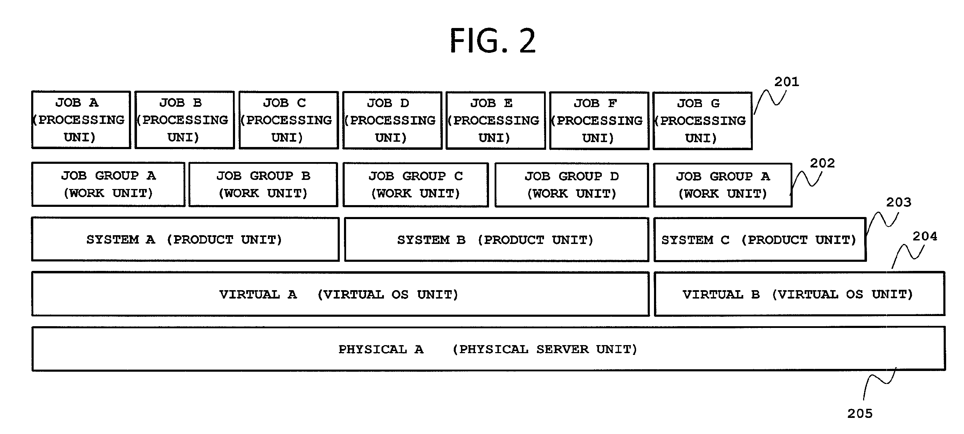

An operation information acquisition command is issued <step 1701> according to the information acquisition level <1309, 1311, 1313> and the management range <1302, 1303, 1304, 1305, 1306, 1307> of the specified node as has been set in the operation statistic management table <FIG. 13>. Moreover, a processing (job) unit <201>, a work (job group) unit <202>, a product (system) unit <203>, a virtual OS unit <204>, and a physical server unit <205> can be specified in a management target <FIG. 2>. Moreover, an operation status is typically acquired at intervals of 60 seconds for 24 hours but may be acquired at varying intervals.

An operation status is acquired for a target node according to the conditions specified in <step 1701> and notifies the center management node of the result <step 1702>.

The center management node stores information received from the target node, in a CPU usage ratio <1310>, a memory usage ratio <1312>, a job processing time <1314>, and a response time <1315> of the operation statistic management table <FIG. 13> <step 1703>.

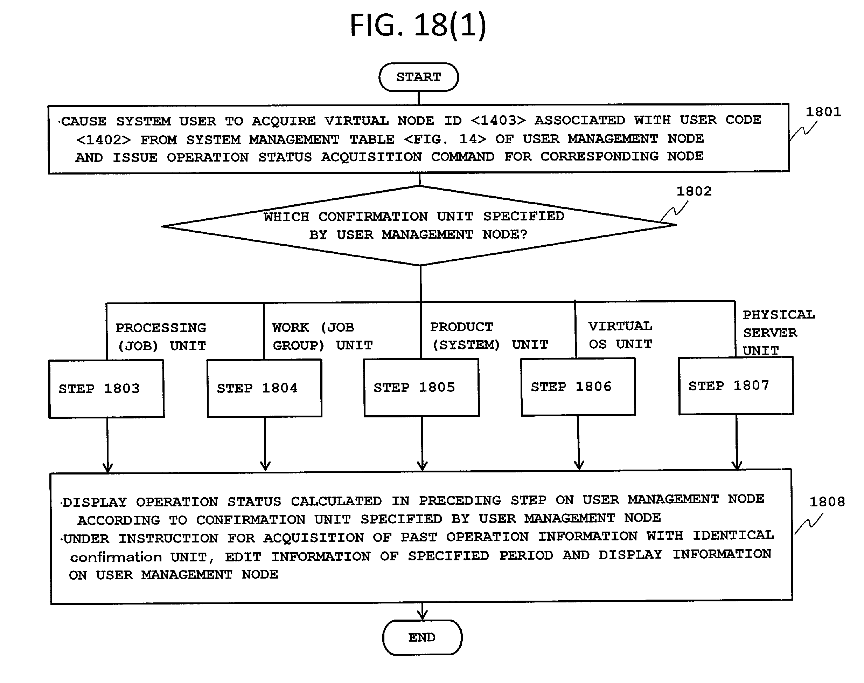

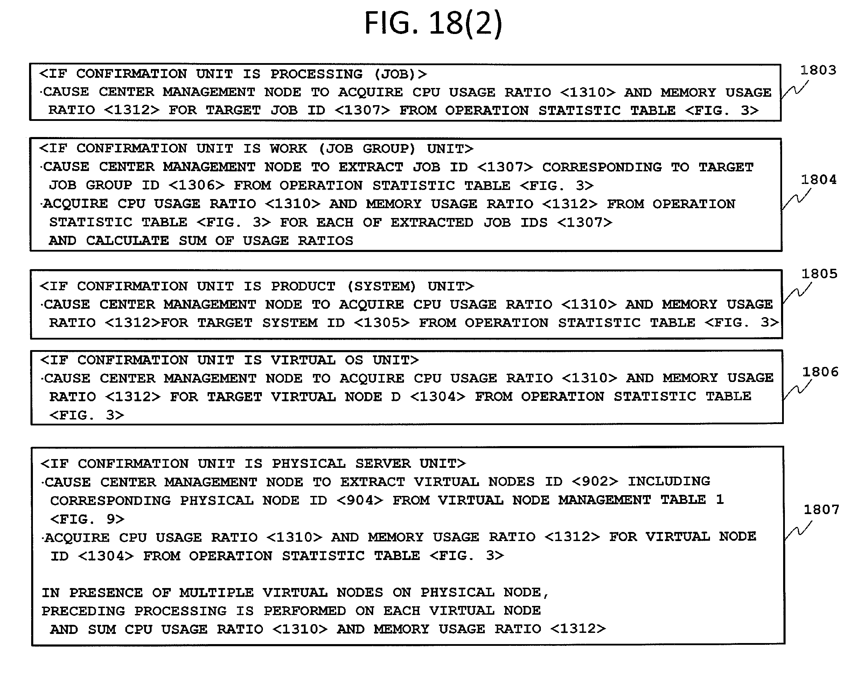

· Operation status confirmation (edit) <FIGS. 18(1) and 18(2)>:

A system user acquires a virtual node ID <1404> associated with a user code <1402> from the system management table <FIG. 14> of the user management node, and issues an operation status acquisition command for the node <step 1801>. Operation statistics are edited in confirmation units specified at the time of the acquisition command in the center management node <step 1802>.

(1) If the confirmation unit is a job ID, the CPU usage ratio <1310> and the memory usage ratio <1312> of a corresponding job are acquired from the operation statistic management table <FIG. 13> <step 1803>.

(2) If the confirmation unit is a job group ID, job IDs <1307> included in a target job group <1306> are extracted from the operation statistic management table <FIG. 13>. The CPU usage ratio <1310> and the memory usage ratio <1312> are acquired for each of the extracted job IDs and then are summed <step 1804>.

(3) If the confirmation unit is a system ID, the CPU usage ratio <1310> and the memory usage ratio <1312> of a job corresponding to a system ID <1305> specified from the operation statistic management table <FIG. 13> are acquired and summed <step 1805>.

(4) If the confirmation unit is a virtual node ID, the CPU usage ratio <1310> and the memory usage ratio <1312> of a job corresponding to a virtual node ID <1304> specified from the operation statistic management table <Figure 13> are acquired and summed <step 1806>.

(5) If the confirmation unit is a physical node ID, the following processing is performed. For example, processing for a specified physical node A <103> in Figure 1 will be described below <step 1807>.

(A) The CPU usage ratio of a job included in a virtual node A <1031> is determined as described in (4).

(B) The CPU usage ratio of a job included in a virtual node B <1034> is determined as described in (4). An acquisition range is however limited to static information containing the physical node ID <1304> corresponding to the physical node A.

(C) A CPU <604> and a memory <605> of the physical node A are acquired from the physical node management table <FIG. 6>. A CPU <905> and a memory <906> that are allocated to the virtual node A and the virtual node B on the physical node A are acquired from the virtual node management table 1 <FIG. 9>.

(D) The CPU usage ratio and the memory usage ratio of the physical node A are calculated by the following equations.

```
· CPU usage ratio = (A) × (the CPU of the virtual node A/the CPU of the physical node A) + (B) × (the CPU of the virtual node B on the physical node A/the CPU of the physical node

A)

· Memory usage ratio = (A) × (the memory of the virtual node A/the memory of the physical node A) + (B) × (the memory of

the virtual node B on the physical node A/the memory of the

physical node A)
```

Operation information calculated in steps <1803, 1804, 1805, 1806, 1807> is displayed on a user management node according to the confirmation unit specified from the user management node <step 1808>. The center management node can also calculate past information in the same confirmation unit. Information on past periods indicated by the user management node can be obtained from the operation statistic management table <FIG. 13>, and a minimum value, a maximum value, and a mean value in a target period can be calculated and displayed.

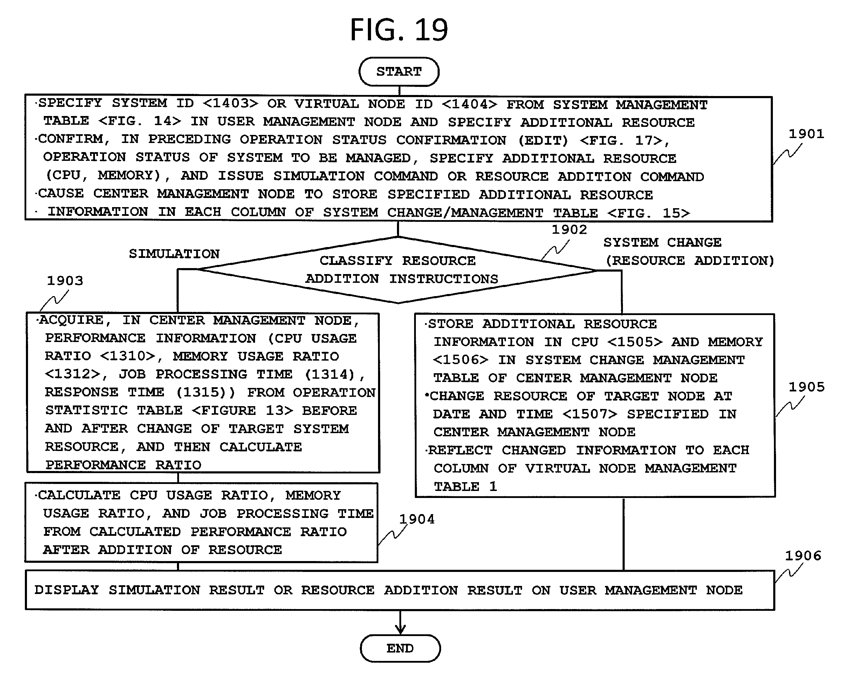

· Simulation (resource addition) <FIG. 19>:

A system ID <1403> or a virtual node ID <1404> is specified from the system management table <FIG. 14> in the user management node to specify a resource addition target. An operation status of a managed system is confirmed in the preceding operation status confirmation (edit) <FIGS. 18(1) and 18(2)>, and then a resource (CPU, memory) to be added is specified. After that, a simulation command or a resource addition command is issued. The center management node stores specified addition resource information in each column of the system change/management table <FIG. 15> <step 1901>.

Resource addition instructions are classified to perform the following processing <step 1902>.

(1) Simulation

In the center management node, performance information (a CPU usage ratio <1310>, a memory usage ratio <1312>, a job processing time <1314>, and a response time <1315>) is acquired from the operation statistic table <FIG. 13> before and after the resource of a target system is changed, and then a performance ratio is calculated <step 1903>.

(A) Throughput (the number of jobs or the number of transactions processed per unit time)

$$\cdot \text{ Throughput} = (\text{CPU performance} \times \text{usage ratio})/\text{the number of}$$
$$\text{steps in each transaction}$$

The CPU performance is obtained from performance <706> of the machine specification management table <FIG. 7> while the usage ratio is obtained from a CPU usage ratio <1310> of the operation statistic management table <FIG. 13>. For the number of steps in each transaction, a numerical value for simulation is set beforehand according to a processing pattern. After a resource is added, a CPU usage ratio is calculated by dividing used CPU by (allocated CPU + added CPU).

(B) Response (a time from the end of input to the start of output)

Response is obtained from a response time <1315> of the operation statistic management table <FIG. 13>. After a resource is added, a response time is calculated by multiplying a response time <1315> by (a throughput after a resource is added ÷ a throughput before a resource is added). It is assumed that if an I/F (LAN, FC) is not added, a job processing time after the addition of a resource (from job entry to the end of output) is equivalent to response after the resource of added.
Additionally, after a resource is added, a memory usage ratio is calculated by dividing used memory by (allocated memory + added memory) <step 1904>.

(2) System change (resource addition)

Additional resource information is stored in a CPU <1505> and a memory <1506> in the system change/management table of the center management node. The resource of the target node is changed in a date and time <1507> specified in the center management node. Changed information is reflected to each column of the virtual node management table 1 <step 1905>.
A simulation result or a resource addition result is displayed on the user management node <step 1906>.

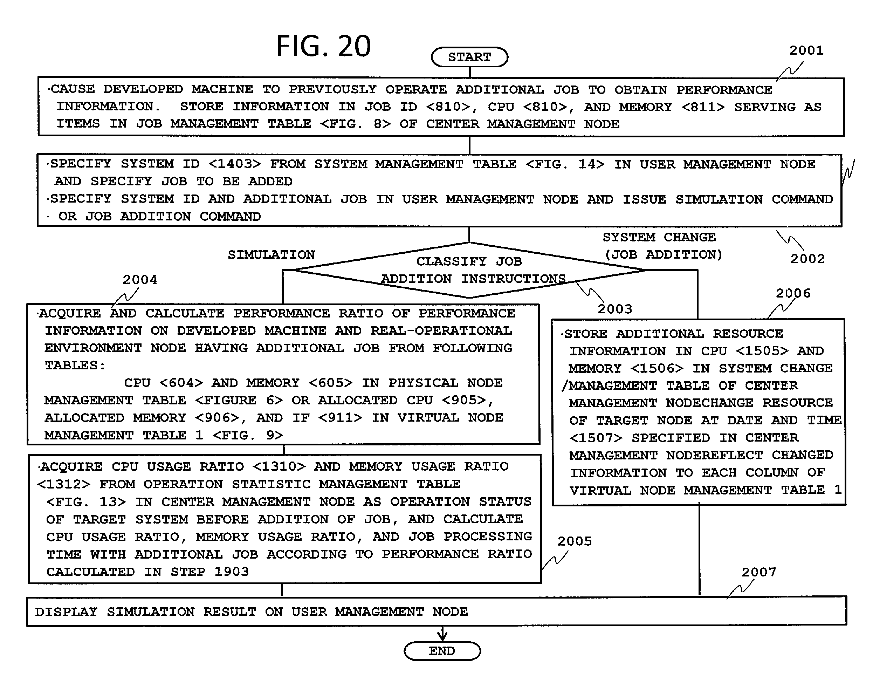

Simulation (job addition) <FIG. 20>:

A developed machine previously executes an additional job to acquire performance information. Information is stored in a job ID <802>, a CPU <810>, and a memory <811> that are the items of the job management table <FIG. 8> in the center management node <step 2001>.
The system ID <1403> is specified from the system management table <FIG. 14> in the user management node to specify an additional job. The system ID and the additional job are specified in the user management node, and then a simulation command or a job addition command is issued <step 2002>.
Job addition instructions are classified to perform the following processing <step 2003>.

(1) Simulation

In the center management node, the performance ratio of performance information on the developed machine and a real-operational environment node having the additional job is obtained and calculated from the table below <step 2004>. (The CPU <604> and the memory <605> in the physical node management table <FIG. 6> or the allocated CPU <905>, the allocated memory <906>, and an IF <911> in the virtual node management table 1 <FIG. 9>).
In the center management node, the CPU usage ratio <1310> and the memory usage ratio <1312> of the operation statistic management table <FIG. 13> are obtained as an operation status of the target system before a job is added, and then a CPU usage ratio, a memory usage ratio, and a job processing time with the additional job are calculated from the performance ratio obtained in step 1903 <step 2005>.

· Simulation value = a performance value before the addition
of a resource + a performance value on the developed
machine × the performance ratio of the developed machine
and the real-operational environment node

The performance value indicates a CPU usage ratio, a memory usage ratio, and a job processing time.

(2) System change (job addition)

Resource information to be added to the CPU <1505> and the memory <1506> of the system change/management table is stored in the center management node. The resource of the target node is changed in the date and time <1507> specified in the center management node. Changed information is reflected to each column of the virtual node management table 1 <FIG. 9> <step 2006>.

A simulation result or a resource addition result is displayed on the user management node <step 2007>.:

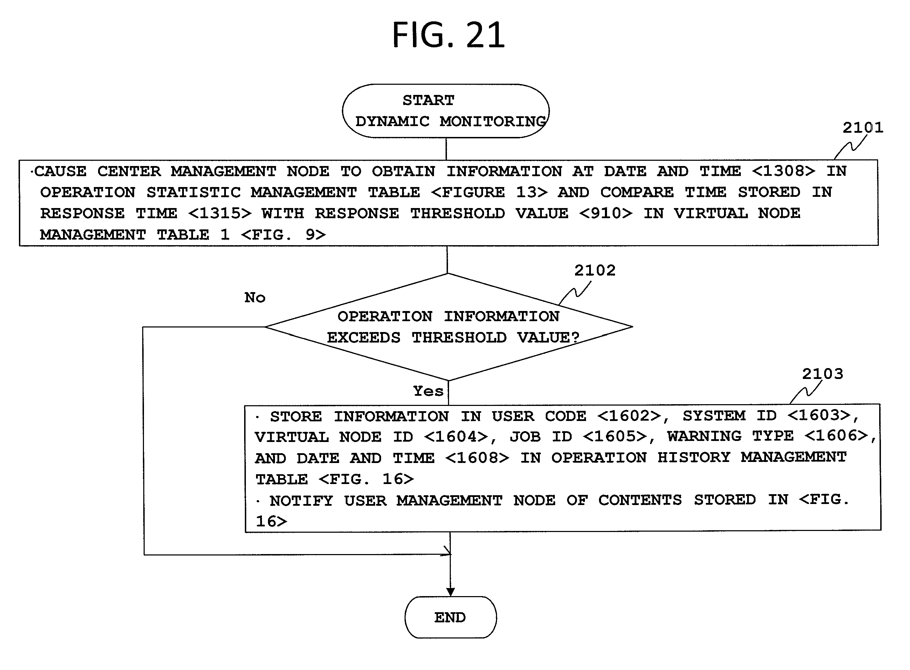

· Dynamic monitoring (response) <FIG. 21>:

The center management node compares a time in the response time <1315> obtained at a date and time <1308> in the operation statistic management table <FIG. 13> and a response threshold value <910> in the virtual node management table 1 <FIG. 9> <step 2101>.

In the case of operation information within the threshold value, monitoring is completed <step 2102>. If the operation information exceeds the threshold value, information is stored in a user code <1602>, a system ID <1603>, a virtual node ID <1604>, a job ID <1605>, a warning type <1606>, and a date and time <1608> in the operation history management table <FIG. 16>. The user management node is notified of contents stored in <FIG. 16> <step 2103>.

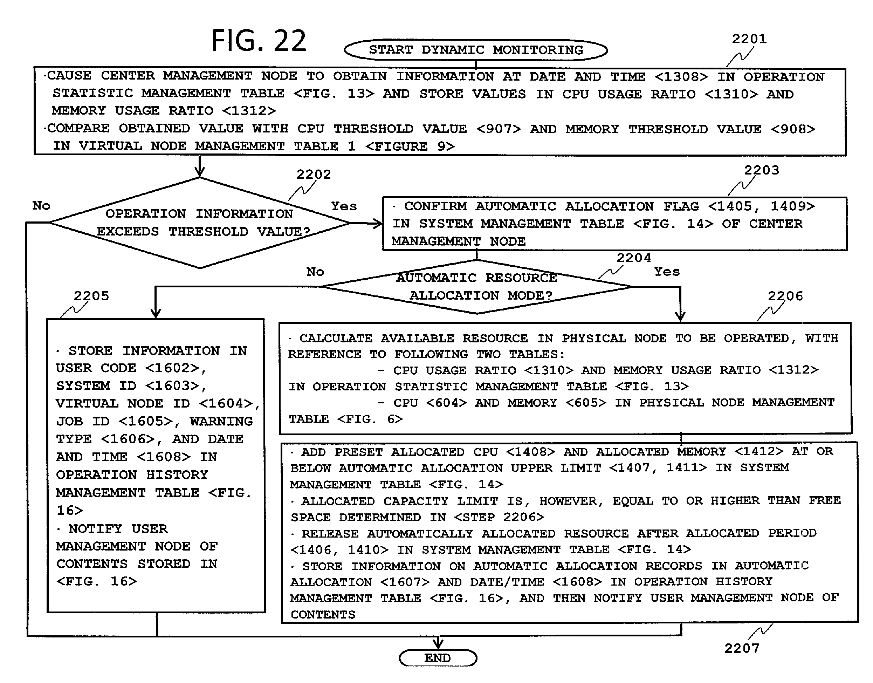

Dynamic monitoring (resource) <FIG. 22>:

The center management node obtains information in the date and time <1308> of the operation statistic management table <FIG. 13> and stores values in the CPU usage ratio <1310> and the memory usage ratio <1312>. The obtained value is compared with a CPU threshold value <907> and a memory threshold value <908> in the virtual node management table 1 <FIG. 9> <step 2201>.

In the case of operation information within the threshold value, monitoring is completed <step 2202>.

If the operation information exceeds the threshold value, automatic allocation flags <1405, 1409> in the system management table <FIG. 14> of the center management node are confirmed <step 2203>.

In modes other than an automatic resource allocation mode, information is stored in the user code <1602>, the system ID <1603>, the virtual node ID <1604>, the job ID <1605>, the warning type <1606>, and the date and time <1608> in the operation history management table <FIG. 16>. The user management node is notified of the contents <step 2205>.

In the automatic resource allocation mode, an available resource in the physical node to be operated is calculated with reference to the two tables (the CPU usage ratio <1310> and the memory usage ratio <1312> in the operation statistic management table <FIG. 13> and the CPU <604> and the memory <605> in the physical node management table <FIG. 6>) <step 2206>.

An allocated CPU <1408> and an allocated memory <1412> that are set beforehand in the system management table <FIG. 14> are added to the target node. However, the limit of an allocated capacity is equal to or lower than the free space determined in <step 2206> and an automatic allocation upper limit <1407, 1411> in the system management table <FIG. 14>. An automatically allocated resource is released after an allocated period <1406, 1410> in the system management table <FIG. 14>.

Information on automatic allocation records is stored in automatic allocation <1607> and the date and time <1608> in the operation history management table <FIG. 16>, and then the user management node is notified of the contents <step 2207>.

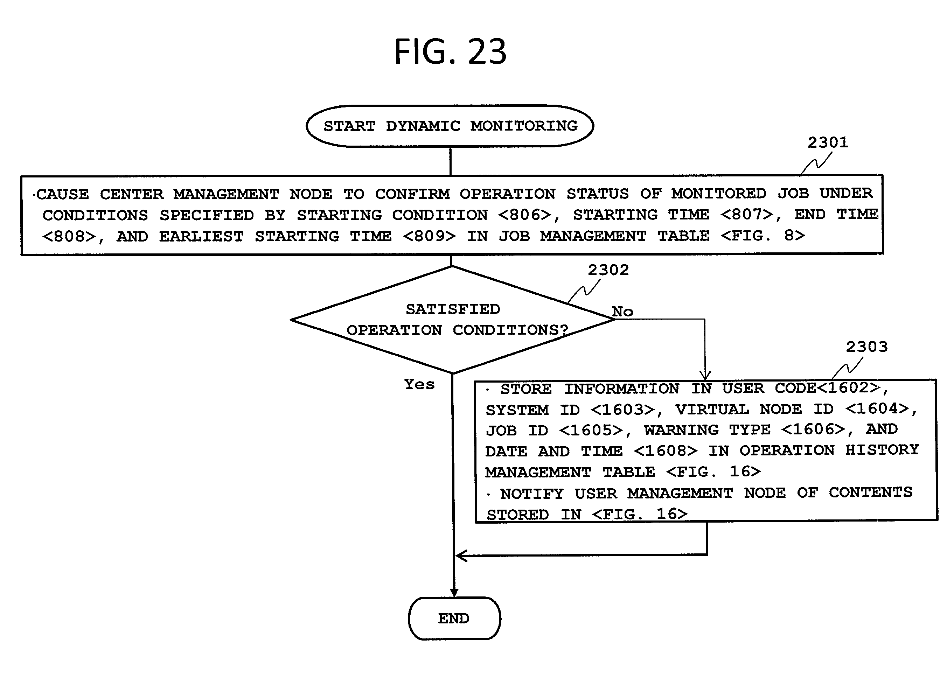

· Automatic monitoring (operation conditions) <FIG. 23>

The center management node confirms the operation status of a monitored job under conditions specified by a starting condition <806>, a starting time <807>, an end time <808>, and an earliest starting time <809> in the job management table <FIG. 8> <step 2301>. When the operation conditions are satisfied, the monitoring is completed <step 2302>.

If the operation conditions are not satisfied, information is stored in the user code <1602>, the system ID <1603>, the virtual node ID <1604>, the job ID <1605>, the warning type <1606>, and the date and time <1608> in the operation history management table <FIG. 16>. The user management node is notified of the contents stored in <FIG. 16> <step 2303>.

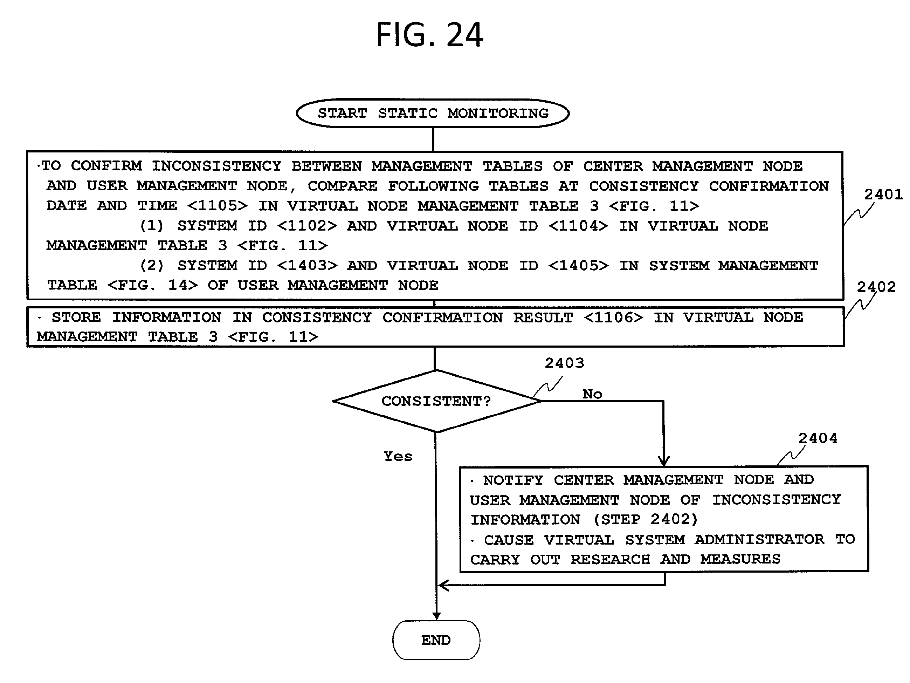

· Static monitoring <FIG. 24>:

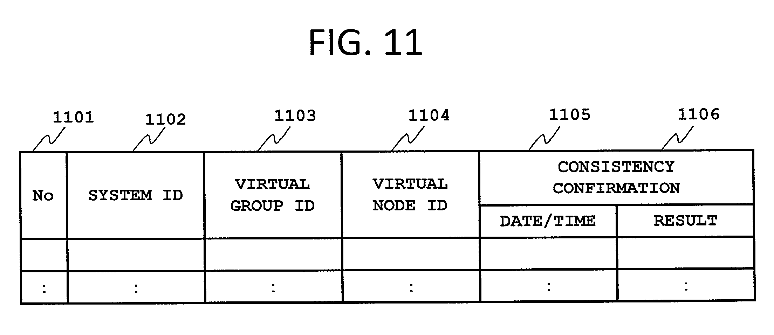

To confirm inconsistency between the management tables of the center management node and the user management node, the two tables are compared with each other (a system ID <1102> and a virtual node ID <1104> in the virtual node management table 3 <FIG. 11> and the system ID <1403> and the virtual node ID <1404> in the system management table <FIG. 14> of the user management node) at a consistency confirmation date and time <1105> in the virtual node management table 3 <FIG. 11> <step 2401>.

Information on the comparison result is stored in a consistency confirmation result <1106> in the virtual node management table 3 <FIG. 11> <step 2402>. In the case of consistency, static monitoring is completed <step 2403>. In the case of inconsistency, the center management node and the user management node are notified of inconsistency information <step 2402>. Furthermore, a virtual system administrator carries out research and measures <step 2404>.

**Claims**

1.  A system resource management method for a virtual system used by a plurality of users,
    the method comprising:

    recording a service menu of service available to each of the users, for each of user IDs that identify the respective users;
    recording information on the virtual system according to the service menu in association with a range and amount of the available information;
    collecting the information available to the user according to corresponding recorded contents, in response to an information service request from the user; and
    outputting the collected information to the user.

2.  The system resource management method for a virtual system according to claim 1, wherein the information on the virtual system is generated for each of products constituting the virtual system, and
    In the collecting, the information on each of the products is collected for each of the users.

3.  The system resource management method for a virtual system according to claim 1 or 2, wherein the collected information is outputted after being categorized into pieces of information for respective purposes.

4.  The system resource management method for a virtual system according to claim 3, wherein the information for the respective purposes is associated with screens available in use of the virtual system.

# FIG. 1

**CENTER MANAGEMENT NODE ~101**

| USER MANAGEMENT | ~1011 |
| NODE MANAGEMENT (PHYSICAL/VIRTUAL) | ~1012 |
| JOB EXECUTION/MANAGEMENT | ~1013 |
| FAILURE DETECTION/NOTIFICATION | ~1014 |
| OPERATION STATUS ANALYSIS/ACCUMULATION | ~1015 |
| OPERATION STATUS PREDICTION | ~1016 |
| SYSTEM CHANGE/MANAGEMENT (PHYSICAL/VIRTUAL) | ~1017 |
| COMPANY MANAGEMENT TABLE | ~1018 |
| USER MANAGEMENT TABLE | ~1019 |
| CENTER MANAGEMENT TABLE | ~1020 |
| PHYSICAL NODE MANAGEMENT TABLE | ~1021 |
| MACHINE SPECIFICATION MANAGEMENT TABLE | ~1022 |
| JOB MANAGEMENT TABLE | ~1023 |
| VIRTUAL NODE MANAGEMENT TABLES 1 TO 3 | ~1024 |
| SERVICE MANAGEMENT TABLE | ~1025 |
| OPERATION STATISTIC MANAGEMENT TABLE | ~1026 |
| SYSTEM CHANGE MANAGEMENT TABLE | ~1027 |

**PHYSICAL NODE A ~103**

VIRTUAL NODE A ~1031

| JOB EXECUTION | ~1032 |
| OPERATION STATUS ACQUISITION /NOTIFICATION | ~1033 |

VIRTUAL NODE B ~1034

| JOB EXECUTION | ~1035 |
| OPERATION STATUS ACQUISITION /NOTIFICATION | ~1036 |

**PHYSICAL NODE B ~105**

| JOB EXECUTION | ~1051 |
| OPERATION STATUS ACQUISITION /NOTIFICATION | ~1052 |

**USER MANAGEMENT NODE ~107**

| SYSTEM MANAGEMENT | ~1071 |
| SYSTEM CHANGE/MANAGEMENT (VIRTUAL/SYSTEM) | ~1072 |
| OPERATION STATUS ANALYSIS RESULT REFERENCE | ~1073 |
| OPERATION STATUS PREDICTION RESULT REFERENCE | ~1074 |
| SYSTEM MANAGEMENT TABLE | ~1075 |
| SYSTEM CHANGE/MANAGEMENT TABLE | ~1076 |

**LEGEND**

| FUNCTION |
| TABLE |
| VIRTUAL NODE |

EP 2 741 212 A1

9

# FIG. 2

| JOB A (PROCESSING UNI) | JOB B (PROCESSING UNI) | JOB C (PROCESSING UNI) | JOB D (PROCESSING UNI) | JOB E (PROCESSING UNI) | JOB F (PROCESSING UNI) | JOB G (PROCESSING UNI) | 201 |

| JOB GROUP A (WORK UNIT) | JOB GROUP B (WORK UNIT) | JOB GROUP C (WORK UNIT) | JOB GROUP D (WORK UNIT) | JOB GROUP A (WORK UNIT) | 202 |

| SYSTEM A (PRODUCT UNIT) | SYSTEM B (PRODUCT UNIT) | SYSTEM C (PRODUCT UNIT) | 203 204 |

| VIRTUAL A (VIRTUAL OS UNIT) | VIRTUAL B (VIRTUAL OS UNIT) |

| PHYSICAL A (PHYSICAL SERVER UNIT) |

205

EP 2 741 212 A1

# FIG. 3

| No | USER CODE | COMPANY INFORMATION |
|---|---|---|
|  |  |  |
| : | : | : |

EP 2 741 212 A1

# FIG. 4

| No | USER CODE | USER ID | AUTHORITY | DEPARTMENT | MANAGEMENT SYSTEM ID |
|----|-----------|---------|-----------|------------|----------------------|
|    |           |         |           |            |                      |
| : | : | : | : | : | : |

# FIG. 5

| No | CENTER CODE | CENTER GROUP | PLACE | AUTHORITY |
|---|---|---|---|---|
| 501 | 502 | 503 | 504 | 505 |
| .. | .. | .. | .. | .. |

# FIG. 6

EP 2 741 212 A1

| No | PHYSICAL NODE ID | MACHINE MODEL ID | CPU | MEMORY | DISK | I/F | ACQUISITION LEVEL |
|----|----|----|----|----|----|----|----|
| | | | | | | | |
| : | : | : | : | : | : | : | |

601  602  603  604  605  606  607  608

# FIG. 7

| No | MACHINE MODEL ID | SERVER GROUP ID | CPU NUMBER | MEMORY CAPACITY | PERFORMANCE |
|----|------------------|-----------------|------------|-----------------|-------------|
|    |                  |                 |            |                 |             |
| :  | :                | :               | :          | :               | :           |

701    702    703    704    705    706

# FIG. 8

| No | JOB ID | JOB GROUP ID | SYSTEM ID | PRECEDING JOB | STARTING CONDITION | STARTING TIME | END TIME | EARLIEST STARTING TIME | CPU | MEMORY |
|----|--------|--------------|-----------|---------------|--------------------|--------------|----------|------------------------|-----|--------|
| 801 | 802 | 803 | 804 | 805 | 806 | 807 | 808 | 809 | 810 | 811 |
|  |  |  |  |  |  |  |  |  |  |  |
| : | : | : | : | : | : | : | : | : | : | : |

# FIG. 9

| No | VIRTUAL NODE ID | VIRTUAL GROUP ID | PHYSICAL NODE ID | ALLOCATED CPU | ALLOCATED MEMORY |
|---|---|---|---|---|---|
| | | | | | |
| : | : | : | : | : | : |

| CPU THRESHOLD VALUE | MEMORY THRESHOLD VALUE | DISK THRESHOLD VALUE | RESPONSE THRESHOLD VALUE | I/F |
|---|---|---|---|---|
| | | | | |
| : | : | : | : | : |

EP 2 741 212 A1

# FIG. 10

| No | VIRTUAL GROUP ID | VIRTUAL NODE ID | SUPPORT LEVEL | SYSTEM CORRECTION /CHANGE POLICY | SERVICE CONTINUATION LEVEL | CENTER CODE | FUNCTION | ACQUISITION LEVEL |
|---|---|---|---|---|---|---|---|---|
| | | | | | | | | |
| : | : | : | : | : | : | : | : | |

EP 2 741 212 A1

# FIG. 11

| No | SYSTEM ID | VIRTUAL GROUP ID | VIRTUAL NODE ID | CONSISTENCY CONFIRMATION | |
| --- | --- | --- | --- | --- | --- |
| | | | | DATE/TIME | RESULT |
| | | | | | |
| : | : | : | : | : | : |

EP 2 741 212 A1

# FIG. 12

EP 2 741 212 A1

| No | VIRTUAL NODE ID | USER CODE | SERVICE LEVEL |
|----|-----------------|-----------|---------------|
|    |                 |           |               |
| :  | :               | :         | :             |

# FIG. 13

| No | PHYSICAL NODE ID | VIRTUAL GROUP ID | VIRTUAL NODE ID | SYSTEM ID | JOB GROUP ID | JOB ID | DATE/TIME |
|---|---|---|---|---|---|---|---|
| | | | | | | | |
| : | : | : | : | : | : | : | : |

| CPU USAGE RATIO | | MEMORY USAGE RATIO | | JOB PROCESSING TIME | | RESPONSE TIME |
|---|---|---|---|---|---|---|
| LEVEL | TIME | LEVEL | TIME | LEVEL | TIME | |
| | | | | | | |
| : | : | : | : | : | : | : |

EP 2 741 212 A1

## FIG. 14

EP 2 741 212 A1

| No | USER CODE | SYSTEM ID | VIRTUAL NODE ID | CPU AUTOMATIC ALLOCATION | | | | MEMORY AUTOMATIC ALLOCATION | | | |
|---|---|---|---|---|---|---|---|---|---|---|---|
| | | | | FLAG | PERIOD | UPPER LIMIT | CPU | FLAG | PERIOD | UPPER LIMIT | MEMORY |
| | | | | | | | | | | | |
| : | : | : | : | : | : | : | : | : | : | : | : |

## FIG. 15

| No | USER CODE | SYSTEM ID | VIRTUAL NODE ID | CHANGED CONTENTS | | DATE/TIME |
|---|---|---|---|---|---|---|
| | | | | CPU | MEMORY | |
| | | | | | | |
| : | : | : | : | : | : | : |

EP 2 741 212 A1

EP 2 741 212 A1

# FIG. 16

| No | USER CODE | SYSTEM ID | VIRTUAL NODE ID | JOB ID | WARNING TYPE | AUTOMATIC ALLOCATION | DATE/TIME |
|---|---|---|---|---|---|---|---|
| 1601 | 1602 | 1603 | 1604 | 1605 | 1606 | 1607 | 1608 |
| | | | | | | | |
| : | : | : | : | : | : | : | : |

# FIG. 17

EP 2 741 212 A1

```
                          ( START )

┌─────────────────────────────────────────────────────────────────────────┐
│ ·CAUSE CENTER MANAGEMENT NODE TO SPECIFY NODE AS OPERATION STATUS ACQUISITION │
│  TARGET FROM FOLLOWING TABLES:                                             │
│     · PHYSICAL NODE ID <602> IN PHYSICAL NODE MANAGEMENT TABLE <FIG. 6>    │
│     · JOB ID <802>, JOB GROUP ID <803>, AND SYSTEM ID <804>               │
│       IN JOB MANAGEMENT TABLE <FIG. 8>                                     │      1701
│     · VIRTUAL NODE ID <902> OR VIRTUAL GROUP ID <903>                      │
│       IN VIRTUAL NODE MANAGEMENT TABLE <FIG. 9>                            │
│                                                                            │
│ ·ISSUE OPERATION STATUS ACQUISITION COMMAND FOR TARGET NODE               │
│  ACCORDING TO ACQUISITION LEVEL <1309, 1311, 1313> (*1)                    │
│  AND MANAGEMENT TARGET RANGE <1302, 1303, 1304, 1305, 1306, 1307>         │
│  THAT ARE SET FOR CORRESPONDING NODE FROM OPERATION STATISTIC MANAGEMENT TABLE │
│  <FIG. 13>                                                                 │
└─────────────────────────────────────────────────────────────────────────┘
                             │
┌─────────────────────────────────────────────────────────────────────────┐
│ ·ACQUIRE ACQUISITION LEVEL SPECIFIED FOR TARGET NODE IN <STEP 1501>       │      1702
│  AND OPERATION STATUS (*2) FOR MANAGEMENT TARGET                          │
│  AND NOTIFIES CENTER MANAGEMENT NODE OF RESULT                            │
└─────────────────────────────────────────────────────────────────────────┘

┌─────────────────────────────────────────────────────────────────────────┐
│ ·CAUSE CENTER MANAGEMENT NODE TO STORE INFORMATION RECEIVED FROM VIRTUAL NODE │  1703
│  IN CPU USAGE RATIO <1310>, MEMORY USAGE RATIO <1312>,                    │
│  JOB PROCESSING TIME <1314>, AND RESPONSE TIME <1315>                     │
│  IN OPERATION STATISTIC MANAGEMENT TABLE <FIG. 13>                        │
└─────────────────────────────────────────────────────────────────────────┘
                             │
                          ( END )
```

*1: CPU USAGE RATIO, MEMORY USAGE RATIO, JOB PROCESSING TIME, RESPONSE TIME

*2: SUPPLEMENT FOR THE ACQUISITION OF AN OPERATION STATUS
·TYPICALLY, OPERATION STATUSES ARE ACQUIRED AT SAMPLING INTERVALS (60 SECONDS) FOR 24 HOURS
·OPERATION STATUSES CAN BE ACQUIRED AT VARYING INTERVALS
 BY SPECIFYING "DATA AND TIME" AND "LEVEL".

# FIG. 18(1)

EP 2 741 212 A1

```
                    ( START )
```

┌─────────────────────────────────────────────────────────────────────┐
│ ·CAUSE SYSTEM USER TO ACQUIRE VIRTUAL NODE ID <1403> ASSOCIATED WITH   │  1801
│   USER CODE <1402> FROM SYSTEM MANAGEMENT TABLE <FIG. 14> OF USER      │
│   MANAGEMENT NODE                                                      │
│   AND ISSUE OPERATION STATUS ACQUISITION COMMAND FOR CORRESPONDING NODE│
└─────────────────────────────────────────────────────────────────────┘

                    ◇ WHICH CONFIRMATION UNIT SPECIFIED    1802
                      BY USER MANAGEMENT NODE? ◇

| PROCESSING | WORK (JOB | PRODUCT | VIRTUAL | PHYSICAL |
| (JOB) UNIT | GROUP) UNIT | (SYSTEM) UNIT | OS UNIT | SERVER UNIT |
| STEP 1803 | STEP 1804 | STEP 1805 | STEP 1806 | STEP 1807 |

┌─────────────────────────────────────────────────────────────────────┐
│ ·DISPLAY OPERATION STATUS CALCULATED IN PRECEDING STEP ON USER         │  1808
│   MANAGEMENT NODE ACCORDING TO CONFIRMATION UNIT SPECIFIED BY USER     │
│   MANAGEMENT NODE                                                      │
│ ·UNDER INSTRUCTION FOR ACQUISITION OF PAST OPERATION INFORMATION WITH  │
│   IDENTICAL confirmation UNIT, EDIT INFORMATION OF SPECIFIED PERIOD    │
│   AND DISPLAY INFORMATION ON USER MANAGEMENT NODE                      │
└─────────────────────────────────────────────────────────────────────┘

                    ( END )

# FIG. 18(2)

```
<IF CONFIRMATION UNIT IS PROCESSING (JOB)>
·CAUSE CENTER MANAGEMENT NODE TO ACQUIRE CPU USAGE RATIO <1310> AND MEMORY USAGE
 RATIO <1312> FOR TARGET JOB ID <1307> FROM OPERATION STATISTIC TABLE <FIG. 3>
```
1803

```
<IF CONFIRMATION UNIT IS WORK (JOB GROUP) UNIT>
·CAUSE CENTER MANAGEMENT NODE TO EXTRACT JOB ID <1307> CORRESPONDING TO TARGET
 JOB GROUP ID <1306> FROM OPERATION STATISTIC TABLE <FIG. 3>
·ACQUIRE CPU USAGE RATIO <1310> AND MEMORY USAGE RATIO <1312> FROM OPERATION
 STATISTIC TABLE <FIG. 3> FOR EACH OF EXTRACTED JOB IDS <1307>
 AND CALCULATE SUM OF USAGE RATIOS
```
1804

```
<IF CONFIRMATION UNIT IS PRODUCT (SYSTEM) UNIT>
·CAUSE CENTER MANAGEMENT NODE TO ACQUIRE CPU USAGE RATIO <1310> AND MEMORY USAGE
 RATIO <1312>FOR TARGET SYSTEM ID <1305> FROM OPERATION STATISTIC TABLE <FIG. 3>
```
1805

```
<IF CONFIRMATION UNIT IS VIRTUAL OS UNIT>
·CAUSE CENTER MANAGEMENT NODE TO ACQUIRE CPU USAGE RATIO <1310> AND MEMORY USAGE
 RATIO <1312> FOR TARGET VIRTUAL NODE D <1304> FROM OPERATION STATISTIC TABLE
 <FIG. 3>
```
1806

```
<IF CONFIRMATION UNIT IS PHYSICAL SERVER UNIT>
·CAUSE CENTER MANAGEMENT NODE TO EXTRACT VIRTUAL NODES ID <902> INCLUDING
 CORRESPONDING PHYSICAL NODE ID <904> FROM VIRTUAL NODE MANAGEMENT TABLE 1
 <FIG. 9>
·ACQUIRE CPU USAGE RATIO <1310> AND MEMORY USAGE RATIO <1312> FOR VIRTUAL NODE
 ID <1304> FROM OPERATION STATISTIC TABLE <FIG. 3>

IN PRESENCE OF MULTIPLE VIRTUAL NODES ON PHYSICAL NODE,
PRECEDING PROCESSING IS PERFORMED ON EACH VIRTUAL NODE
 AND SUM CPU USAGE RATIO <1310> AND MEMORY USAGE RATIO <1312>
```
1807

EP 2 741 212 A1

# FIG. 19

START

·SPECIFY SYSTEM ID <1403> OR VIRTUAL NODE ID <1404> FROM SYSTEM MANAGEMENT TABLE <FIG. 14> IN USER MANAGEMENT NODE AND SPECIFY ADDITIONAL RESOURCE
·CONFIRM, IN PRECEDING OPERATION STATUS CONFIRMATION (EDIT) <FIG. 17>, OPERATION STATUS OF SYSTEM TO BE MANAGED, SPECIFY ADDITIONAL RESOURCE (CPU, MEMORY), AND ISSUE SIMULATION COMMAND OR RESOURCE ADDITION COMMAND
·CAUSE CENTER MANAGEMENT NODE TO STORE SPECIFIED ADDITIONAL RESOURCE
· INFORMATION IN EACH COLUMN OF SYSTEM CHANGE/MANAGEMENT TABLE <FIG. 15>

1901

CLASSIFY RESOURCE ADDITION INSTRUCTIONS

1902

SIMULATION

SYSTEM CHANGE (RESOURCE ADDITION)

1903

·ACQUIRE, IN CENTER MANAGEMENT NODE, PERFORMANCE INFORMATION (CPU USAGE RATIO <1310>, MEMORY USAGE RATIO <1312>, JOB PROCESSING TIME (1314), RESPONSE TIME (1315)) FROM OPERATION STATISTIC TABLE <FIGURE 13> BEFORE AND AFTER CHANGE OF TARGET SYSTEM RESOURCE, AND THEN CALCULATE PERFORMANCE RATIO

·CALCULATE CPU USAGE RATIO, MEMORY USAGE RATIO, AND JOB PROCESSING TIME FROM CALCULATED PERFORMANCE RATIO AFTER ADDITION OF RESOURCE

1904

·STORE ADDITIONAL RESOURCE INFORMATION IN CPU <1505> AND MEMORY <1506> IN SYSTEM CHANGE MANAGEMENT TABLE OF CENTER MANAGEMENT NODE
·CHANGE RESOURCE OF TARGET NODE AT DATE AND TIME <1507> SPECIFIED IN CENTER MANAGEMENT NODE
·REFLECT CHANGED INFORMATION TO EACH COLUMN OF VIRTUAL NODE MANAGEMENT TABLE 1

1905

DISPLAY SIMULATION RESULT OR RESOURCE ADDITION RESULT ON USER MANAGEMENT NODE

1906

END

# FIG. 20

START

EP 2 741 212 A1

2001

·CAUSE DEVELOPED MACHINE TO PREVIOUSLY OPERATE ADDITIONAL JOB TO OBTAIN PERFORMANCE INFORMATION. STORE INFORMATION IN JOB ID <810>, CPU <810>, AND MEMORY <811> SERVING AS ITEMS IN JOB MANAGEMENT TABLE <FIG. 8> OF CENTER MANAGEMENT NODE

·SPECIFY SYSTEM ID <1403> FROM SYSTEM MANAGEMENT TABLE <FIG. 14> IN USER MANAGEMENT NODE AND SPECIFY JOB TO BE ADDED
·SPECIFY SYSTEM ID AND ADDITIONAL JOB IN USER MANAGEMENT NODE AND ISSUE SIMULATION COMMAND
· OR JOB ADDITION COMMAND

CLASSIFY JOB ADDITION INSTRUCTIONS

SIMULATION

SYSTEM CHANGE (JOB ADDITION) 2002

2004

2003

2006

·ACQUIRE AND CALCULATE PERFORMANCE RATIO OF PERFORMANCE INFORMATION ON DEVELOPED MACHINE AND REAL-OPERATIONAL ENVIRONMENT NODE HAVING ADDITIONAL JOB FROM FOLLOWING TABLES:
    CPU <604> AND MEMORY <605> IN PHYSICAL NODE MANAGEMENT TABLE <FIGURE 6> OR ALLOCATED CPU <905>, ALLOCATED MEMORY <906>, AND IF <911> IN VIRTUAL NODE MANAGEMENT TABLE 1 <FIG. 9>

·ACQUIRE CPU USAGE RATIO <1310> AND MEMORY USAGE RATIO <1312> FROM OPERATION STATISTIC MANAGEMENT TABLE <FIG. 13> IN CENTER MANAGEMENT NODE AS OPERATION STATUS OF TARGET SYSTEM BEFORE ADDITION OF JOB, AND CALCULATE CPU USAGE RATIO, MEMORY USAGE RATIO, AND JOB PROCESSING TIME WITH ADDITIONAL JOB ACCORDING TO PERFORMANCE RATIO CALCULATED IN STEP 1903

·STORE ADDITIONAL RESOURCE INFORMATION IN CPU <1505> AND MEMORY <1506> IN SYSTEM CHANGE /MANAGEMENT TABLE OF CENTER MANAGEMENT NODECHANGE RESOURCE OF TARGET NODE AT DATE AND TIME <1507> SPECIFIED IN CENTER MANAGEMENT NODEREFLECT CHANGED INFORMATION TO EACH COLUMN OF VIRTUAL NODE MANAGEMENT TABLE 1

2005

2007

DISPLAY SIMULATION RESULT ON USER MANAGEMENT NODE

END

# FIG. 21

```
        ┌─────────────────────┐
        │       START         │
        │  DYNAMIC MONITORING  │
        └─────────────────────┘
```

**2101**

·CAUSE CENTER MANAGEMENT NODE TO OBTAIN INFORMATION AT DATE AND TIME <1308> IN OPERATION STATISTIC MANAGEMENT TABLE <FIGURE 13> AND COMPARE TIME STORED IN RESPONSE TIME <1315> WITH RESPONSE THRESHOLD VALUE <910> IN VIRTUAL NODE MANAGEMENT TABLE 1 <FIG. 9>

**2102**

No ◁────── OPERATION INFORMATION EXCEEDS THRESHOLD VALUE?

Yes

**2103**

· STORE INFORMATION IN USER CODE <1602>, SYSTEM ID <1603>, VIRTUAL NODE ID <1604>, JOB ID <1605>, WARNING TYPE <1606>, AND DATE AND TIME <1608> IN OPERATION HISTORY MANAGEMENT TABLE <FIG. 16>
· NOTIFY USER MANAGEMENT NODE OF CONTENTS STORED IN <FIG. 16>

```
        ┌─────────────┐
        │     END     │
        └─────────────┘
```

# FIG. 22

( START DYNAMIC MONITORING )                                    2201

·CAUSE CENTER MANAGEMENT NODE TO OBTAIN INFORMATION AT DATE AND TIME <1308> IN OPERATION STATISTIC MANAGEMENT TABLE <FIG. 13> AND STORE VALUES IN CPU USAGE RATIO <1310> AND MEMORY USAGE RATIO <1312>
·COMPARE OBTAINED VALUE WITH CPU THRESHOLD VALUE <907> AND MEMORY THRESHOLD VALUE <908> IN VIRTUAL NODE MANAGEMENT TABLE 1 <FIGURE 9>

2202

No ← OPERATION INFORMATION EXCEEDS THRESHOLD VALUE? → Yes

2203

· CONFIRM AUTOMATIC ALLOCATION FLAG <1405, 1409> IN SYSTEM MANAGEMENT TABLE <FIG. 14> OF CENTER MANAGEMENT NODE

2204

No ← AUTOMATIC RESOURCE ALLOCATION MODE? → Yes

2205

· STORE INFORMATION IN USER CODE <1602>, SYSTEM ID <1603>, VIRTUAL NODE ID <1604>, JOB ID <1605>, WARNING TYPE <1606>, AND DATE AND TIME <1608> IN OPERATION HISTORY MANAGEMENT TABLE <FIG. 16>
· NOTIFY USER MANAGEMENT NODE OF CONTENTS STORED IN <FIG. 16>

2206

· CALCULATE AVAILABLE RESOURCE IN PHYSICAL NODE TO BE OPERATED, WITH REFERENCE TO FOLLOWING TWO TABLES:
      - CPU USAGE RATIO <1310> AND MEMORY USAGE RATIO <1312> IN OPERATION STATISTIC MANAGEMENT TABLE <FIG. 13>
      - CPU <604> AND MEMORY <605> IN PHYSICAL NODE MANAGEMENT TABLE <FIG. 6>

· ADD PRESET ALLOCATED CPU <1408> AND ALLOCATED MEMORY <1412> AT OR BELOW AUTOMATIC ALLOCATION UPPER LIMIT <1407, 1411> IN SYSTEM MANAGEMENT TABLE <FIG. 14>
· ALLOCATED CAPACITY LIMIT IS, HOWEVER, EQUAL TO OR HIGHER THAN FREE SPACE DETERMINED IN <STEP 2206>
· RELEASE AUTOMATICALLY ALLOCATED RESOURCE AFTER ALLOCATED PERIOD <1406, 1410> IN SYSTEM MANAGEMENT TABLE <FIG. 14>
· STORE INFORMATION ON AUTOMATIC ALLOCATION RECORDS IN AUTOMATIC ALLOCATION <1607> AND DATE/TIME <1608> IN OPERATION HISTORY MANAGEMENT TABLE <FIG. 16>, AND THEN NOTIFY USER MANAGEMENT NODE OF CONTENTS

2207

( END )

# FIG. 23

START DYNAMIC MONITORING

2301

·CAUSE CENTER MANAGEMENT NODE TO CONFIRM OPERATION STATUS OF MONITORED JOB UNDER CONDITIONS SPECIFIED BY STARTING CONDITION <806>, STARTING TIME <807>, END TIME <808>, AND EARLIEST STARTING TIME <809> IN JOB MANAGEMENT TABLE <FIG. 8>

2302

SATISFIED OPERATION CONDITIONS? — No

Yes

2303

· STORE INFORMATION IN USER CODE<1602>, SYSTEM ID <1603>, VIRTUAL NODE ID <1604>, JOB ID <1605>, WARNING TYPE <1606>, AND DATE AND TIME <1608> IN OPERATION HISTORY MANAGEMENT TABLE <FIG. 16>
· NOTIFY USER MANAGEMENT NODE OF CONTENTS STORED IN <FIG. 16>

END

EP 2 741 212 A1

# FIG. 24

START STATIC MONITORING

·TO CONFIRM INCONSISTENCY BETWEEN MANAGEMENT TABLES OF CENTER MANAGEMENT NODE
AND USER MANAGEMENT NODE, COMPARE FOLLOWING TABLES AT CONSISTENCY CONFIRMATION
DATE AND TIME <1105> IN VIRTUAL NODE MANAGEMENT TABLE 3 <FIG. 11>
      (1) SYSTEM ID <1102> AND VIRTUAL NODE ID <1104> IN VIRTUAL NODE
MANAGEMENT TABLE 3 <FIG. 11>
      (2) SYSTEM ID <1403> AND VIRTUAL NODE ID <1405> IN SYSTEM MANAGEMENT
TABLE <FIG. 14> OF USER MANAGEMENT NODE

    2401

· STORE INFORMATION IN CONSISTENCY CONFIRMATION RESULT <1106> IN VIRTUAL NODE
MANAGEMENT TABLE 3 <FIG. 11>

    2402

2403

CONSISTENT? — No

Yes

2404

· NOTIFY CENTER MANAGEMENT NODE AND
USER MANAGEMENT NODE OF INCONSISTENCY
INFORMATION (STEP 2402)
· CAUSE VIRTUAL SYSTEM ADMINISTRATOR TO
CARRY OUT RESEARCH AND MEASURES

END

**EUROPEAN SEARCH REPORT**

Europäisches
Patentamt
European
Patent Office
Office européen
des brevets

Application Number

EP 13 18 9828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/196968 A1 (KOBAYASHI EMIKO [JP] ET AL) 11 August 2011 (2011-08-11) * paragraph [0060] - paragraph [0103] * ----- | 1-4 | INV. G06F11/34 |
| X | US 2005/004879 A1 (MATHIAS THOMAS B [US] ET AL) 6 January 2005 (2005-01-06) * paragraph [0028] - paragraph [0038] * ----- | 1-4 | |

TECHNICAL FIELDS
SEARCHED      (IPC)

G06F

The present search report has been drawn up for all claims

| Place of search | Date of completion of the search | Examiner |
|---|---|---|
| Munich | 20 December 2013 | Kalejs, Eriks |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 18 9828

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2013

| Patent document cited in search report | | Publication date | Patent family member(s) | | Publication date |
|---|---|---|---|---|---|
| US 2011196968 | A1 | 11-08-2011 | EP<br>JP<br>US<br>WO | 2418578 A1<br>5130375 B2<br>2011196968 A1<br>2010109681 A1 | 15-02-2012<br>30-01-2013<br>11-08-2011<br>30-09-2010 |
| US 2005004879 | A1 | 06-01-2005 | NONE | | |

EPO FORM P0459

For more details about this annex : see Official Journal of the European Patent Office, No. 12/82

**EP 2 741 212 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005208999 A